# EUROPÄISCHE PATENTSCHRIFT

(11) **EP 1 858 993 B1**
(45) Veröffentlichungstag und Bekanntmachung des Hinweises auf die Patenterteilung: **17.09.2008**
(21) Anmeldenummer: 06701194.0
(22) Anmeldetag: 25.01.2006
(51) Int. Cl.: C09D 17/00

(54) **UNIVERSALPIGMENTPRÄPARATIONEN**
UNIVERSAL PIGMENT PREPARATIONS
PREPARATIONS PIGMENTAIRES UNIVERSELLES

(30) Priorität: 17.03.2005 DE 102005012316
(43) Veröffentlichungstag der Anmeldung: 28.11.2007
(73) Patentinhaber: Evonik Degussa GmbH, 45128 Essen (DE)
(72) Erfinder: WENNING, Andreas, 48301 Nottuln (DE); LOEST, Dietmar, 48249 Dülmen (DE)
(86) Internationale Anmeldenummer: PCT/EP2006/050437
(87) Internationale Veröffentlichungsnummer: WO 2006/097379

(56) Entgegenhaltungen:
- EP-A- 1 078 946
- EP-A- 1 529 821
- DE-A1- 2 400 194
- DE-A1- 4 404 809

## Beschreibung

Die Erfindung betrifft neue Universalpigmentpräparationen als praktisch schaumfreie wässrige als auch lösemittelhaltige und lösemittelfreie Pigmentpräparationen und deren Verwendung in wässrigen, lösemittelhaltigen oder lösemittelfreien Beschichtungsstoffen wie beispielsweise Farben, Lacke, Klebstoffe, Tinten oder Druckfarben.

Für die Dispergierung von Füllstoffen und Pigmenten in flüssigen Medien bedient man sich in der Regel Dispergiermitteln, um so die für eine effektive Dispergierung der Feststoffe benötigten mechanischen Scherkräfte zu reduzieren und gleichzeitig möglichst hohe Füllgrade zu realisieren. Die Dispergiermittel unterstützen das Aufbrechen von Agglomeraten, benetzen und/oder belegen als oberflächenaktive Verbindungen die Oberfläche der zu dispergierenden Partikel und stabilisieren diese gegen eine unerwünschte Reagglomeration.

Netz- und Dispergiermittel erleichtern bei der Herstellung von Farben und Lacken die Einarbeitung von Pigmenten und Füllstoffen, die als wichtige Formulierungsbestandteile das optische Erscheinungsbild und die physikalisch-chemischen Eigenschaften von Beschichtungen wesentlich bestimmen. Für eine optimale Ausnutzung müssen diese Feststoffe zum einen gleichmäßig in Lacken und Farben verteilt werden, zum anderen muss die einmal erreichte Verteilung stabilisiert werden. Die stabilisierende Komponente wird in vielen Fällen auch von Bindemittelkomponenten wahrgenommen. Derartige Bindemittel sind auch deshalb wertvolle Komponenten für Beschichtungsstoffe, weil sie zu einer schnelleren Trocknung und zur Erhöhung der Härte der resultierenden Filme beitragen.

Wichtig für eine Anwendung in Universalpigmentpräparationen ist erstens eine universelle Verträglichkeit mit anderen Bindemitteln - wie z. B. mit den bedeutenden Langölalkydharzen, Pflanzenölen, Kohlenwasserstoffharzen, Acrylatharzen und Polyamiden - zweitens und eine universelle Löslichkeit in organischen Lösemitteln, wie z. B. in den aus ökologischen und toxikologischen Gründen häufig eingesetzten Reinaliphaten und Testbenzinen. Solche in Pigmentpräparationen verwendbare Bindemittel mit universeller Verträglichkeit und Löslichkeit werden z. B. in der DE 44 04 809 beschrieben.

Als Dispergiermittel für Universalpigmentpräparationen werden insbesondere Alkylphenolethoxylate oder Fettalkoholalkoxylate eingesetzt, die zu einer sterischen Stabilisierung erreichter Pigmentverteilungen beitragen. Die sehr leistungsfähigen Alkylphenolethoxylate sind aus ökotoxikologischen Gründen in die Kritik geraten. Ihr Einsatz in Wasch- und Reinigungsmitteln ist in vielen Ländern bereits verboten. Für die Lack- und Farbenindustrie ist ähnliches zu erwarten. Fettalkoholethoxylate erreichen in vielen Fällen nicht die guten pigmentbenetzenden Eigenschaften der Alkylphenolethoxylate, da es ihnen an adsorptionsfähigen Gruppen fehlt. Insbesondere der nicht adsorbierte Teil dieser Produktgruppe stabilisiert zudem in unerwünschter Weise den Schaum in wässrigen Pigmentpräparationen.

Blockcopolymere Polyalkylenoxide sind toxikologisch unbedenklich, stark adsorptionsfähig aber weniger schaumstabilisierend. Sie werden z. B. in der EP 1 078 946 beschrieben. Eine vollständige Niederschlagung der Schaumbildung können diese Produkte aber nicht erreichen. Daher müssen den wässrigen Pigmentpräparationen auch hier entschäumungsaktive Substanzen zugesetzt werden. Diese Substanzen haben jedoch andere negative Begleiterscheinungen wie unerwünschte Oberflächendefekte. Ein Einsatz vieler Dispergieradditive scheidet aus, da die Wasserfestigkeit oder die Lichtbeständigkeit von Beschichtungen negativ beeinflusst wird.

Der vorliegenden Erfindung lag daher die Aufgabe zugrunde, Pigmentpräparationen zu finden, wobei eine breite Verträglichkeit mit verwendeten Bindemitteln und Löslichkeit in verwendeten organischen Lösemitteln und Wasser gegeben sein sowie die Schaumbildung in wässrigen Pigmentpräparationen unterdrückt werden sollte.

Die der Erfindung zugrunde liegende Aufgabe konnte überraschenderweise durch den Einsatz einer Kombination von blockcopolymeren, styrenoxidhaltigen Polyalkylenoxiden und Keton-Aldehyd-Harzen, gelöst werden.

Überraschenderweise wurde gefunden, dass die Kombination von blockcopolymeren, styrenoxidhaltigen Polyalylenoxiden mit Keton-Aldehyd-Harzen hervorragend geeignet ist als Dispergiermittel sowohl für lösemittelfreie, lösemittelhaltige als auch für wässrige Universalpigmentpräparationen.

Es wurde eine breite Verträglichkeit mit Bindemitteln und Löslichkeit in für Universalpigmentpräparationen verwendeten organischen Lösemitteln und Wasser gefunden. Außerdem wird die Schaumbildung in wässrigen Pigmentpräparationen sehr effizient unterdrückt. Die Eigenschaften von Beschichtungsstoffen, wie Antrocknung und Härte werden positiv beeinflusst, wenn diese die erfindungsgemäße Pigmentpräparationen enthalten. Es war bei Kenntnis des Standes der Technik nicht vorhersehbar, dass die Kombination der Einzelkomponenten zu der Zusammensetzung führt, welche über die genannte Summe der Eigenschaften verfügt.

Gegenstand der Erfindung sind wässrige, lösemittelhaltige oder lösemittelfreie Pigmentpräparation im Wesentlichen enthaltend Zusammensetzungen aus
A) 95 bis 5 Gew.-% mindestens eines blockcopolymeren, styrenoxidhaltigen Polyalkylenoxids,
   und
B) 5 bis 95 Gew.-% eines Keton-Aldehyd-Harzes,
   und
C) 0 bis 80 Gew.-% mindestens eines Lösemittels,
   wobei die Summe der Gewichtsangaben von Komponente A) bis C) 100 Gew.-% beträgt, und
D) Pigmente
   und
E) Füllstoffe
   und
F) 0 bis 10 Gew.-% Hilfsstoffe
wobei die Menge der Summe aus Komponente A), Komponente B) und Komponente C) 2 - 300 Gew.-%, bezogen auf die Summe der Gewichte der jeweiligen Komponenten D) und E), beträgt und die Menge an Komponente E) in der Pigmentpräparation auch 0 Gew.-% sein kann.

Da sowohl blockcopolymere, styrenoxidhaltige Polyalkylenoxide als auch Keton-Aldehyd-Harze in Wasser unlöslich sind, war es völlig überraschend, dass eine Kombination beider Verbindungen in Wasser löslich ist und einen Einsatz in wässrigen Pigmentpräparationen erlaubt.

Prinzipiell sind alle blockcopolymeren, styrenoxidhaltigen Polyalkylenoxide als Komponente A) geeignet.

Die in der Erfindung bevorzugt verwendeten blockcopolymeren, styrenoxidhaltigen Polyalkylenoxide A) werden z. B. in der EP 1 078 946 beschrieben. Sie besitzen die allgemeine Formel I:

R¹O(SO)ₐ(EO)_{b}(PO)_{c}(BO)_{d}R²,

wobei
R¹ ein geradkettiger oder verzweigter oder cycloaliphatischer Rest mit 8 bis 13 Kohlenstoffatomen bedeutet,
R² = Wasserstoff, ein Acrylrest, Alkylrest oder Carbonsäurerest mit jeweils 1 bis 8 C-Atomen bedeutet,
SO = Stryrenoxid,
EO = Ethylenoxid,
PO = Propylenoxid,
BO = Butylenoxid und
a = 1 bis 1,9,
b = 3 bis 50,
c = 0 bis 3,
d = 0 bis 3
bedeutet,
wobei a, c oder d von 0 verschieden, und b >= a+c+d ist.

Prinzipiell sind alle Keton-Aldehyd-Harze als Komponente B) geeignet.

Die bevorzugten Keton-Aldehyd-Harze B), die in der DE 44 05 809 beschrieben werden, werden aus cycloaliphatischen Ketonen, Aldehyd und gegebenenfalls weiteren Monomeren hergestellt.

Dabei enthalten diese Keton-Aldehyd-Harze
I. 40 bis 100 Mol-%, bezogen auf alle eingesetzten Ketone, mindestens eines alkylsubstituierten Cyclohexanons mit einem oder mehreren Alkylresten mit 1 bis 8 Kohlenstoffatomen,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können, sowie gegebenenfalls Phenole und/oder Harnstoff oder seine Derivate, enthalten.

Besonders bevorzugte C₁- bis C₈-alkylsubstituierte Cyclohexanone sind 4-tert.-Butylcyclohexanon und 3,3,5-Trimethylcyclohexanon.

Das Mischungsverhältnis der erfindungsgemäß verwendeten blockcopolymeren, styrenoxidhaltigen Polyalkylenoxide und der Keton-Aldehyd-Harze ist 95 : 5 bis 5 : 95. Verwendet man in dieser Mischung mehr als 50 Gew.-% Keton-Aldehyd-Harz muss aus Viskositätsgründen ein Hilfslösemittel C) verwendet werden.

Als Komponenten C) kommen Wasser und alle organischen Lösemittel in Betracht. Zu den organischen Lösemitteln zählen beispielsweise Alkohole, Ester, Ketone, Ether, Glycolether, aromatische Kohlenwasserstoffe, hydroaromatische Kohlenwasserstoffe, Halogenkohlenwasserstoffe, Terpenkohlenwasserstoffe, aliphatische Kohlenwasserstoffe, Esteralkohole, Dimethylformamid oder Dimethylsulfoxid.

Für lösemittelhaltige Pigmentpräparationen sind organische Lösemittel bevorzugt, die ökologisch und toxikologisch unbedenklich sind und die bis zu einem gewissen Grad mit Wasser verträglich bzw. mischbar sind.

Für wässrige Pigmentpräparationen wird die Mischung aus blockcopolymeren, styrenoxidhaltigen Polyalkylenoxiden A) und Keton-Aldehyd-Harzen B) vorzugsweise so gewählt, dass auf ein organisches Lösemittel als Komponente C) verzichtet werden kann.

Als Komponente D) können beispielsweise anorganische oder organische Pigmente sowie Ruße eingesetzt werden.

Als anorganische Pigmente seien exemplarisch genannt Titandioxide und Eisenoxide.

In Betracht zu ziehende organische Pigmente sind beispielsweise Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-, Naphthalintetracarbonsäure-, Perylen-, Isoamidolin(on)-, Flavanthron-, Pyranthron- oder Isoviolanthron-Reihe.

Als Ruße können Gasruße, Flammruße oder Furnaceruße eingesetzt werden. Diese Ruße können zusätzlich nachoxidiert und/oder verperlt sein.

Neben Pigmenten können als Komponente E) auch Füllstoffe mitverwendet werden. Sie sind meist pulverförmige, im Anwendungsmedium praktisch unlösliche Substanzen. Sie werden überwiegend aus natürlich vorkommenden Mineralien durch Abbau, Reinigung, Vermahlung and anschließende Klassierung in Kornfraktionen gewonnen. Aber auch synthetische Produkte, wie Sulfate oder Carbonate, werden als Füllstoffe verwendet, wenn es beispielsweise um Reinheit (Helligkeit) oder besondere Feinteiligkeit geht. Im Unterschied zu Pigmenten besitzen Füllstoffe i. d. R. ein geringes Deckvermögen. Neben der Vergrößerung des Volumens (Verbilligung) zeigen sie im Film ganz spezielle Wirkungen, wie z. B. Reflexion, Oberflächenstruktur, Abrieb- oder Steinschlagbeständigkeit. Ihr Einsatz wird von ihrer Teilchengröße, Teilchengrößenverteilung, Teilchenform, Teilchenstruktur, Härte, Dichte, Farbe, Benetzbarkeit, Abrasivität, Oberflächenadsorption, Brechungsindex, chemische Zusammensetzung, Reinheit, Beständigkeit und Preis vorbestimmt. Die im Bereich Bindemittel/Füllstoff bestehenden Wechselwirkungen müssen in jedem Einzelfall berücksichtigt werden. Die Bestimmung der optimalen Füllstoffmenge ist einem Fachmann jedoch geläufig. Füllstoffe werden im Allgemeinen von 0 bis 95 Gew.-%, bezogen auf das Pigment, mitverwendet.

Füllstoffe, die in wässrigen und/oder lösemittelhaltigen Lacken dispergiert werden können, sind beispielsweise solche auf Basis von Kaolin, Talkum, Glimmer, andere Silicate, Quarz, Christobalit, Wollastonit, Perlite, Diatomeenerde, Faserfüllstoffe, Aluminiumhydroxid, Bariumsulfat oder Calciumcarbonat.

Als Komponente F) können alle dem Fachmann bekannten Hilfsstoffe für Pigmentpräparationen eingesetzt werden. Dazu zählen beispielsweise Entschäumer, Entlüfter, Rheologiehilfsmittel, Oberflächenadditive, die z. B. Gleitfähigkeit, Kratzfestigkeit, Anti-Blocking, Verlauf und Glanz beeinflussen, Substratbenetzungsadditive oder Biozide.

Gegenstand der Erfindung ist auch ein Verfahren zur Herstellung von wässrigen, lösemittelhaltigen oder lösemittelfreien Pigmentpräparationen im Wesentlichen enthaltend Zusammensetzungen aus
A) 95 bis 5 Gew.-% mindestens eines blockcopolymeren, styrenoxidhaltigen Polyalkylenoxids,
   und
B) 5 bis 95 Gew.-% eines Keton-Aldehyd-Harzes,
   und
C) 0 bis 80 Gew.-% mindestens eines Lösemittels,
   wobei die Summe der Gewichtsangaben von Komponente A) bis C) 100 Gew.-% beträgt,
   und
D) Pigmente,
   und
E) Füllstoffe
   und
F) 0 bis 10 Gew.-% Hilfsstoffe
wobei die Menge der Summe aus Komponente A), Komponente B) und Komponente C) 2 - 300 Gew.-%, bezogen auf die Summe der Gewichte der jeweiligen Komponenten D) und E), beträgt und die Menge an Komponente E) in der Pigmentpräparation auch 0 Gew.-% sein kann,
indem die Verbindungen A), B) C), D), E) und F) bei Temperaturen von 20 bis 80 °C in einem Dispermaten, Scandex-Mischer, Red Devil, Einwalzenstuhl, Dreiwalzenstuhl, Perlmühle oder einem anderen geeigneten Aggregat gemischt werden.

Die Mischung aus blockcopolymeren, styrenoxidhaltigen Polyalkylenoxiden und Keton-Aldehyd-Harzen kann bei der erfindungsgemäßen Verwendung entweder vorab mit den zu dispergierenden Pigmenten vermischt oder direkt in dem wässrigen oder lösemittelhaltigen Dispergiermedium vor oder gleichzeitig mit der Zugabe der Pigmente gelöst werden.

Die erfindungsgemäßen Pigmentpräparationen werden in Beschichtungsstoffen eingesetzt, wie beispielsweise in Farben, Lacken, Klebstoffen und Druckfarben.

Gegenstand der Erfindung ist daher auch die Verwendung von wässrigen, lösemittelhaltigen oder lösemittelfreien Pigmentpräparationen im Wesentlichen enthaltend Zusammensetzungen aus
A) 95 bis 5 Gew.-% mindestens eines blockcopolymeren, styrenoxidhaltigen Polyalkylenoxids,
   und
B) 5 bis 95 Gew.-% eines Keton-Aldehyd-Harzes,
   und
C) 0 bis 80 Gew.-% mindestens eines Lösemittels,
   wobei die Summe der Gewichtsangaben von Komponente A) bis C) 100 Gew.-% beträgt, und
D) Pigmente,
   und
E) Füllstoffe
   und
F) 0 bis 10 Gew.-% Hilfsstoffe
wobei die Menge der Summe aus Komponente A), Komponente B) und Komponente C) 2 - 300 Gew.-%, bezogen auf die Summe der Gewichte der jeweiligen Komponenten D) und E), beträgt und die Menge an Komponente E) in der Pigmentpräparation auch 0 Gew.-% sein kann,
in Beschichtungsstoffen.

Als Beschichtungsstoffe, in denen die erfindungsgemäßen Pigmentpräparationen bevorzugt eingebracht werden können, kommen alle dem Fachmann bekannten wässrigen, lösemittelhaltigen und lösemittelfreien Systeme in Betracht. Diese Systeme können beispielsweise physikalisch trocknend, oxidativ trocknend oder anderweitig reaktiv in 1K- oder 2K-Lacken sein.

Es gibt eine Vielzahl von physikalisch trocknenden Harzen, beispielsweise Nitrocellulose, Polyvinylbutyral, VC-Copolymere, Acrylate, Methacrylate, Celluloseester, Celluloseether, Kohlenwasserstoffharze, Phenolharze, Kolophoniumharze, Maleinatharze, Polystyrolharze, Siliconharze, Kautschuk basierende Lackharze wie Cyclokautschuk, Chlorkautschuk, chlorierte Polyolefine oder Oligobutadiene, Polyolefine, Polyvinylester, Polyvinylalkohole, Polyvinylacetale, Epoxide, Amninoharze, Amidoharze und Polyesterharze. Oxidativ trocknende Beschichtungsstoffe sind beispielsweise Alkydharze. 1K-Beschichtungsstoffe basieren beispielsweise auf Acrylat-, Epoxid-, Polyvinylacetat-, Polyester- oder Polyurethanharzen. 1K-Beschichtungsstoffe sind auch solche auf Basis von hydroxylgruppenhaltigen Polyacrylat- oder Polyesterharzen mit Melaminharzen oder blockierten Polyisocyanatharzen als Vernetzer. 2K-Beschichtungsstoffe sind beispielsweise solche auf Basis von Polyepoxidsystemen oder von hydroxylgruppenhaltigen Polyacrylat- oder Polyesterharzen mit nicht blockierten Polyisocyanatharzen als Vernetzer.

Die erfindungsgemäßen Zusammensetzungen zeichnen sich durch eine sehr gute Adsorptionsfähigkeit an Pigmenten, eine exzellente Schaumzerstörung und eine niedrige Viskosität aus. Darüber hinaus werden die Trocknungsgeschwindigkeit, Wasser- und Chemikalienbeständigkeit sowie die Härte der Beschichtungen positiv beeinflusst.

Die folgenden Beispiele sollen die Erfindung weiter erläutern, aber nicht ihren Anwendungsbereich beschränken:

### Beispiele

### 1) Herstellung eines styrenoxidhaltigen Polyalkylenoxids (nicht erfindungsgemäß)

336,4 g (2,34 mol) Trimethylcyclohexanol und 16,3 g (0,23 mol) Kaliummethylat wurden in einen Reaktor gegeben. Nach sorgfältiger Spülung mit Reinstickstoff wurde auf 110 °C erhitzt, und es wurden 308,2 g (2,554 mol) Styrenoxid innerhalb einer Stunde zugegeben. Nach zwei weiteren Stunden war die Anlagerung des Styrenoxids beendet, erkennbar an einem Restgehalt an Styrenoxid, der laut Gaschromatogramm < 0,1 Gew.-% lag. Anschließend wurden 339,2 g (7,71 Mol) Ethylenoxid so schnell in den Reaktor dosiert, dass die Innentemperatur 120 °C und der Druck 6 bar nicht überschritt. Nach vollständiger Einleitung des Ethylenoxids wurde die Temperatur so lange auf 115 °C gehalten, bis ein konstanter Manometerdruck das Ende der Nachreaktion anzeigte. Schließlich wurden bei 80 bis 90 °C die nicht umgesetzten Restmonomere im Vakuum entfernt. Das erhaltene Produkt wurde mit Hilfe von Phosphorsäure neutralisiert und das Wasser durch Destillation, das entstandene Kaliumphosphat durch Filtration zusammen mit einem Filterhilfsmittel entfernt. Das Molekulargewicht aus der Bestimmung der Hydroxylzahl bei einer angenommenen Funktionalität von 1 betrug M = 467 g/mol.

### 2) Herstellung eines Keton-Aldehyd-Harzes (nicht erfindungsgemäß)

176,7 g 4-tert-Butylcyclohexanon, 481,7 g 3,3,5-Trimethylcyclohexanon, 112,4 g Cyclohexanon und 373,1 g einer 30 Gew.-%igen Formalinlösung wurden vorgelegt und auf 60 °C erhitzt. Danach wurden 114,5 g einer 50 Gew.-%igen Natriumhydroxidlösung innerhalb von 15 min zugetropft und auf 80 °C erhitzt. Im Anschluss wurde innerhalb von 90 min 200,0 g der Formalinlösung zugetropft und 4 Stunden unter Rückfluss bei 85 °C gehalten. Das entstandene Harz wurde nach Zugabe von Eisessig mit Wasser neutralgewaschen. Nach Destillation resultierte ein hellgelbes, sprödes Harze mit einem Erweichungspunkt von 85 °C.

### 3) Herstellung der erfindungsgemäßen Zusammensetzung

600 g des styrenoxidhaltigen Polyalkylenoxids aus Beispiel 1) und 400 g des Keton-Aldehyd-Harzes aus Beispiel 2) wurden unter Rühren bei 80 °C miteinander gemischt. Das Produkt war klar und hatte bei 23 °C eine Viskosität von 13446 mPa s.

### 4) Herstellung der erfindungsgemäßen Zusammensetzung mit Bindemittel- und Dispergiereigenschaften

500 g des styrenoxidhaltigen Polyalkylenoxids aus Beispiel 1) und 500 g des Keton-Aldehyd-Harzes aus Beispiel 2) wurden unter Rühren bei 80 °C miteinander gemischt. Das Produkt war klar und hatte bei 23 °C eine Viskosität von 88810 mPa s.

Zur Überprüfung der Wirksamkeit der erfindungsgemäßen Zusammensetzung als Dispergieradditive mit Bindemitteleigenschaften sowie der Vergleichsverbindungen wurde wie folgt vorgegangen:

### 5) Herstellung der Pigmentpräparationen

Dazu wurden die jeweiligen Additive mit Wasser und/oder organischem Lösemittel gemischt und danach die Pigmente zugegeben. Die Dispergierung erfolgte nach Zugabe von 2 mm Glasperlen 30 min bei 35 °C und 3000 U/min in einem Dispermaten. Die wässrigen Pigmentpräparationen wurden mit einer Mischung aus Dimethylaminoethanol und Wasser (1 : 1 Gew.-%) auf einen pH-Wert von ca. 9 eingestellt.

### 5A) Formulierung einer wässrigen, schwarzen Pigmentpräparation (erfindungsgemäß)

| | |
|---|---|
| 62,9 g | Wasser |
| 8,0 g | erfindungsgemäße Zusammensetzung aus Beispiel 3) |
| 20,0 g | Spezialschwarz 4 (Degussa AG) |

Diese schwarze Pigmentpräparation war leicht rührbar und schaumfrei.

### 5B) Formulierung einer wässrigen, schwarzen Pigmentpräparation (Vergleich)

| | |
|---|---|
| 70,9 g | Wasser |
| 8,0 g | nicht erfindungsgemäße Verbindung aus Beispiel 1) |
| 20,0 g | Spezialschwarz 4 (Degussa AG) |

Diese schwarze Pigmentpräparation war hochviskos und schäumte stark.

### 5C) Formulierung einer lösemittelhaltigen, schwarzen Pigmentpräparation (erfindungsgemäß)

| | |
|---|---|
| 75,0 g | Butylglykol |
| 25,0 g | erfindungsgemäße Zusammensetzung aus Beispiel 4) |
| 20,0 g | Spezialschwarz 4 (Degussa AG) |

Diese schwarze Pigmentpräparation war niedrigviskos.

### 5D) Formulierung einer wässrigen, blauen Pigmentpräparation (erfindungsgemäß)

| | |
|---|---|
| 80,0 g | Wasser |
| 20,0 g | erfindungsgemäße Zusammensetzung aus Beispiel 3) |
| 48,0 g | Heliogenblau 6975F (BASF AG) |

Diese blaue Pigmentpräparation mit einer Viskosität von 58 mPa s war leicht rührbar und schaumfrei. Sie war auch nach Lagerung bei 50 °C von mehr als einer Woche unverändert stabil.

### 5E) Formylierung einer wässrigen, blauen Pigmentpräparation (Vergleich)

| | |
|---|---|
| 80,0 g | Wasser |
| 20,0 g | nicht erfindungsgemäße Verbindung aus Beispiel 1) |
| 48,0 g | Heliogenblau 6975F (BASF AG) |

Diese blaue Pigmentpräparation war hochviskos und schäumte stark.

### 6) Herstellung von Beschichtungsstoffen aus den Pigmentpräparationen

Zur Herstellung von Beschichtungsstoffen wurden die Pigmentpräparationen vorgelegt und die Auflackverbindungen portionsweise zugegeben.

### 6A) Herstellung von lösemittelfreien, schwarzen Beschichtungsstoffen

Die erfindungsgemäße und die nicht erfindungsgemäße Pigmentpräparation wurden mit einer wässrigen Polyurethan-Dispersion aufgelackt.

| | erfindungsgemäß | Vergleich |
|---|---|---|
| Schwarzpigmentpräparation | 8,4 g aus Beispiel 5A) | 8,4 g aus Beispiel 5B) |
| Alberdingk U 800 (Alberdingk Boley GmbH) | 63,0 g | 63,0 g |
| Trocknung: 1 h bei 60 °C, Aufzug auf Glasplatte mit 100 µm Ziehrahmen | | |
| Glanz 20° | 74 | 74 |
| Glanz 60° | 84 | 84 |
| Hazegloss | 20 | 18 |
| Pendelhärte | 86 | 87 |

### 6B) Herstellung von lösemittelhaltigen und lösemittelarmen, schwarzen Beschichtungsstoffen

Die erfindungsgemäße lösemittelhaltige Schwarzpigmentpräparation wurde sowohl lösemittelhaltig als auch wässrig aufgelackt.

| | | |
|---|---|---|
| Schwarzpigmentpräparation | 6,8 g aus Beispiel 5C) | 7,0 g aus Beispiel 5C) |
| Degalan 706 (Röhm GmbH) | 50,0 g | 63,0 g |
| Dynapol HW 112-56 (Degussa AG) | - | 55,5 g |
| Cymel 325 (Cytech) | - | 3,7 g |
| Demineralisiertes Wasser | - | 10,0 g |
| Tego 7442, 10 % in Wasser (Tego Chemie Service GmbH) | - | 0,8 g |
| Aufzug auf Glasplatte mit 100 µm Ziehrahmen | Trocknung: 24 h bei 25 °C | Trocknung: 20 min bei 140 °C |
| Glanz 20° | 73 | 92 |
| Glanz 60° | 84 | 98 |
| Hazegloss | 26 | 70 - 76 |
| Pendelhärte | 141 | 175 |

### 7) Herstellung abgetönter Farben

Zur Herstellung abgetönter Lacke wurde die blaue Pigmentpräparation mit einem Weißlack gemischt.

Der Weißlack bestand aus 70,69 g Alberdingk U 800 (Alberdingk Boley GmbH), 28,24 g Kronos 2310 (Kronos Titan GmbH) und 0,07 g Aerosil 200 (Degussa AG).

| | erfindungsgemäß | Vergleich |
|---|---|---|
| Weißlack | 99,0 g | 99,0 g |
| Blaupigmentpräparation | 3,7 g aus Beispiel 5D) | 3,7 g aus Beispiel 5E) |
| Demineralisiertes Wasser | 6,5 g | 6,5 g |

Das Bindemittel-Weißpigment-Verhältnis betrug 1:1, das Verhältnis Blaupigment zu Weißlack 1 : 100.

Von den mit einem 100 µm Ziehrahmen aufgezogenen Abtönlacken wurde nach 2 min Trocknung der Rub-out-Test gemacht. Zudem wurde die Farbstärke ermittelt.

| | Farbstärke F | Delta E nach Rub-out |
|---|---|---|
| Erfindungsgemäß | 31 | 0,32 |
| Vergleich | 29 | 0,35 |

Der Abtönlack auf Basis der erfindungsgemäßen Zusammensetzung trocknete wesentlich schneller als der Vergleichsabtönlack.

Es lassen sich sowohl lösemittelhaltige, lösemittelarme als auch lösemittelfreie Pigmentpräparationen und Beschichtungsstoffe herstellen. Die wässrigen Pigmentpräparationen sind im Unterschied zu den Vergleichsbeispielen niedrigviskos und praktisch schaumfrei.

Zudem wurden die Farbstärkeentwicklung und die Flockulationsbeständigkeit von Pigmentpräparationen sowie die Antrocknung von Beschichtungen positiv beeinflusst.

## Patentansprüche

1. Wässrige, lösemittelhaltige oder lösemittelfreie Pigmentpräparation im Wesentlichen enthaltend Zusammensetzungen aus
A) 95 bis 5 Gew.-% mindestens eines blockcopolymeren, styrenoxidhaltigen Polyalkylenoxids,
und
B) 5 bis 95 Gew.-% eines Keton-Aldehyd-Harzes,
und
C) 0 bis 80 Gew.-% mindestens eines Lösemittels,
wobei die Summe der Gewichtsangaben von Komponente A) bis C) 100 Gew.-% beträgt,
und
D) Pigmente
und
E) Füllstoffe
und
F) 0 bis 10 Gew.-% Hilfsstoffe
wobei die Menge der Summe aus Komponente A), Komponente B) und Komponente C) 2 - 300 Gew.-%, bezogen auf die Summe der Gewichte der jeweiligen Komponenten D) und E), beträgt und die Menge an Komponente E) in der Pigmentpräparation auch 0 Gew.-% sein kann.

2. Pigmentpräparation nach Anspruch 1,
**dadurch gekennzeichnet,**
**dass** die blockcopolymeren, styrenoxidhaltigen Polyalkylenoxide A) die allgemeine Formel I besitzen:
R¹O(SO)ₐ(EO)_{b}(PO)_{c}(BO)_{d}R²,
wobei
R¹ ein geradkettiger oder verzweigter oder cycloaliphatischer Rest mit 8 bis 13 Kohlenstoffatomen bedeutet,
R² = Wasserstoff, ein Acrylrest, Alkylrest oder Carbonsäurerest mit jeweils 1 bis 8 C-Atomen bedeutet,
SO = Stryrenoxid,
EO = Ethylenoxid,
PO = Propylenoxid,
BO = Butylenoxid und
a = 1 bis 1,9,
b = 3 bis 50,
c = 0 bis 3,
d = 0 bis 3
bedeutet,
wobei a, c oder d von 0 verschieden und b >= a+c+d ist.

3. Pigmentpräparation nach mindestens einem der vorherigen Ansprüche,
**dadurch gekennzeichnet,**
**dass** die Keton-Aldehyd-Harze B)
I. 40 bis 100 Mol-%, bezogen auf alle eingesetzten Ketone, mindestens eines alkylsubstituierten Cyclohexanons mit einem oder mehreren Alkylresten mit 1 bis 8 Kohlenstoffatomen,
II. 0,8 bis 2,0 mol mindestens eines aliphatischen Aldehyds, bezogen auf 1 mol aller eingesetzten Ketone und
III. 0 bis 60 Mol-%, bezogen auf alle eingesetzten Ketone, weitere Ketone mit aliphatischen, cycloaliphatischen, aromatischen Kohlenwasserstoffresten, wobei diese gleich oder verschieden und wiederum mit den genannten Kohlenwasserstoffresten in der Kohlenwasserstoffkette substituiert sein können sowie gegebenenfalls Phenole und/oder Harnstoff oder seine Derivate, enthalten.

4. Pigmentpräparation nach mindestens einem der vorherigen Ansprüche,
**dadurch gekennzeichnet,**
**dass** das Mischungsverhältnis der blockcopolymeren, styrenoxidhaltigen Polyalkylenoxide A) und der Keton-Aldehyd-Harze B) 95 : 5 bis 5 : 95 beträgt.

5. Pigmentpräparation nach mindestens einem der vorherigen Ansprüche,
**dadurch gekennzeichnet,**
**dass** als Lösemittel C) Wasser enthalten ist.

6. Pigmentpräparation nach mindestens einem der vorherigen Ansprüche,
**dadurch gekennzeichnet,**
**dass** als Lösemittel C) ein organisches Lösemittel enthalten ist.

7. Zusammensetzungen nach mindestens einem der vorherigen Ansprüche,
**dadurch gekennzeichnet,**
**dass** als Lösemittel C) mindestens ein Alkohol, Ester, Keton, Ether, Glycolether, aromatischer Kohlenwasserstoff, hydroaromatischer Kohlenwasserstoff, Halogenkohlenwasserstoff, Terpenkohlenwasserstoff, aliphatischer Kohlenwasserstoff, Esteralkohol, Dimethylformamid oder Dimethylsulfoxid, allein oder in Mischungen enthalten ist.

8. Pigmentpräparation nach mindestens einem der vorherigen Ansprüche,
**dadurch gekennzeichnet,**
**dass** anorganische und/oder organische Pigmente und/oder Ruße enthalten sind.

9. Pigmentpräparation nach mindestens einem der vorherigen Ansprüche,
**dadurch gekennzeichnet,**
**dass** als anorganische Pigmente Titandioxide oder Eisenoxide enthalten sind.

10. Pigmentpräparation nach mindestens einem der vorherigen Ansprüche,
**dadurch gekennzeichnet,**
**dass** als organische Pigmente Azopigmente, Metallkomplex-Pigmente, anthrachinoide Pigmente, Phthalocyaninpigmente, polycyclische Pigmente, insbesondere solche der Thioindigo-, Chinacridon-, Dioxazin-, Pyrrolo-, Naphthalintetracarbonsäure-, Perylen-, Isoamidolin(on), Flavanthron-, Pyranthron- oder Isoviolanthron-Reihe enthalten sind.

11. Pigmentpräparation nach mindestens einem der vorherigen Ansprüche,
**dadurch gekennzeichnet,**
**dass** als Ruße Gasruße, Flammruße oder Furnaceruße eingesetzt werden.

12. Verfahren zur Herstellung von wässrigen, lösemittelhaltigen oder lösemittelfreien Pigmentpräparationen im Wesentlichen enthaltend Zusammensetzungen aus
A) 95 bis 5 Gew.-% mindestens eines blockcopolymeren, styrenoxidhaltigen Polyalkylenoxids,
und
B) 5 bis 95 Gew.-% eines Keton-Aldehyd-Harzes,
und
C) 0 bis 80 Gew.-% mindestens eines Lösemittels,
wobei die Summe der Gewichtsangaben von Komponente A) bis C) 100 Gew.-% beträgt,
und
D) Pigmente
und
E) Füllstoffe
und
F) 0 bis 10 Gew.-% Hilfsstoffe
wobei die Menge der Summe aus Komponente A), Komponente B) und Komponente C) 2 - 300 Gew.-%, bezogen auf die Summe der Gewichte der jeweiligen Komponenten D) und E), beträgt und die Menge an Komponente E) in der Pigmentpräparation auch 0 Gew.-% sein kann,
indem die Verbindungen A), B) C), D), E) und F) bei Temperaturen von 20 bis 80 °C in einem Dispermaten, Scandex-Mischer, Red Devil, Einwalzenstuhl, Dreiwalzenstuhl, Perlmühle oder einem anderen geeigneten Aggregat gemischt werden.

13. Verwendung von wässrigen, lösemittelhaltigen oder lösemittelfreien Pigmentpräparationen im Wesentlichen enthaltend Zusammensetzungen aus
A) 95 bis 5 Gew.-% mindestens eines blockcopolymeren, styrenoxidhaltigen Polyalkylenoxids,
und
B) 5 bis 95 Gew.-% eines Keton-Aldehyd-Harzes,
und
C) 0 bis 80 Gew.-% mindestens eines Lösemittels,
wobei die Summe der Gewichtsangaben von Komponente A) bis C) 100 Gew.-% beträgt,
und
D) Pigmente,
und
E) Füllstoffe
und
F) 0 bis 10 Gew.-% Hilfsstoffe
wobei die Menge der Summe aus Komponente A), Komponente B) und Komponente C) 2 - 300 Gew.-%, bezogen auf die Summe der Gewichte der jeweiligen Komponenten D) und E), beträgt und die Menge an Komponente E) in der Pigmentpräparation auch 0 Gew.-% sein kann,
in Beschichtungsstoffen.

14. Verwendung nach Anspruch 13,
**dadurch gekennzeichnet,**
**dass** als Beschichtungsstoffe Farben, Lacke, Klebstoffe oder Druckfarben enthalten sind.

## Claims

1. Aqueous, solventborne or solvent-free pigment preparation essentially containing compositions comprising
A) 95% to 5% by weight of at least one block-copolymeric, styrene oxide-containing polyalkylene oxide,
and
B)5% to 95% by weight of a ketone-aldehyde resin,
and
C)0 to 80% by weight of at least one solvent,
the sum of the amounts by weight of components A) to C) being 100% by weight,
and
D) pigments
and
E) fillers,
and
F) 0 to 10% by weight of auxiliaries,
the amount of the sum of component A), component B), and component C) being 2% - 300% by weight, based on the sum of the weights of the respective components D) and E), and it being possible for the amount of component E) in the pigment preparation also to be 0% by weight.

2. Pigment preparation according to Claim 1, **characterized in that** the block-copolymeric, styrene oxide-containing polyalkylene oxides A) possess the general formula I:
R¹O(SO)ₐ(EO)_{b}(PO)_{c}(BO)_{d}R²,
where
R¹ is a straight-chain or branched or cycloaliphatic radical having 8 to 13 carbon atoms,
R² is hydrogen or an acryloyl radical, alkyl radical or carboxylic acid radical having in each case 1 to 8 carbon atoms,
SO = styrene oxide,
EO = ethylene oxide,
PO = propylene oxide,
BO = butylene oxide and
a = 1 to 1.9,
b = 3 to 50,
c = 0 to 3,
d = 0 to 3,
a, c or d being other than 0, and b >= a+c+d.

3. Pigment preparation according to either of the preceding claims, **characterized in that** the ketone-aldehyde resins B) contain
I.40 to 100 mol%, based on all ketones employed, of at least one alkyl-substituted cyclohexanone having one or more alkyl radicals having 1 to 8 carbon atoms,
II. 0.8 to 2.0 mol of at least one aliphatic aldehyde, based on 1 mol of all ketones employed, and
III. 0 to 60 mol%, based on all ketones employed, of further ketones having aliphatic, cycloaliphatic, aromatic hydrocarbon radicals, it being possible for these ketones to be identical or different and to be substituted in turn, in the hydrocarbon chain, by the stated hydrocarbon radicals, and also, if desired, phenols and/or urea or its derivatives.

4. Pigment preparation according to at least one of the preceding claims, **characterized in that** the mixing ratio of the block-copolymeric, styrene oxide-containing polyalkylene oxides A) to the ketone-aldehyde resins B) is 95 : 5 to 5 : 95.

5. Pigment preparation according to at least one of the preceding claims,
**characterized in that** water is present as solvent C).

6. Pigment preparation according to at least one of the preceding claims, **characterized in that** an organic solvent is present as solvent C).

7. Composition according to at least one of the preceding claims, **characterized in that** at least one alcohol, ester, ketone, ether, glycol ether, aromatic hydrocarbon, hydroaromatic hydrocarbon, halogenated hydrocarbon, terpene hydrocarbon, aliphatic hydrocarbon, ester alcohol, dimethylformamide or dimethyl sulfoxide, alone or in a mixture, is present as solvent C).

8. Pigment preparation according to at least one of the preceding claims, **characterized in that** it comprises organic and/or inorganic pigments and/or carbon blacks.

9. Pigment preparation according to at least one of the preceding claims, **characterized in that** it comprises titanium dioxides or iron oxides as inorganic pigments.

10. Pigment preparation according to at least one of the preceding claims, **characterized in that** it comprises azo pigments, metal complex pigments, anthraquinonoid pigments, phthalocyanine pigments, polycyclic pigments, especially those of the thioindigo, quinacridone, dioxazine, pyrrolo, naphthalenetetracarboxylic acid, perylene, isoamidolin(on)e, flavanthrone, pyranthrone or isoviolanthrone series, as organic pigments.

11. Pigment preparation according to at least one of the preceding claims, **characterized in that** gas blacks, lamp blacks or furnace blacks are used as carbon blacks.

12. Process for preparing an aqueous, solventborne or solvent-free pigment preparation essentially containing compositions comprising
A) 95% to 5% by weight of at least one block-copolymeric, styrene oxide-containing polyalkylene oxide,
and
B)5% to 95% by weight of a ketone-aldehyde resin,
and
C)0 to 80% by weight of at least one solvent,
the sum of the amounts by weight of components A) to C) being 100% by weight,
and
D) pigments
and
E) fillers,
and
F) 0 to 10% by weight of auxiliaries,
the amount of the sum of component A), component B), and component C) being 2% - 300% by weight, based on the sum of the weights of the respective components D) and E), and it being possible for the amount of component E) in the pigment preparation also to be 0% by weight,
by mixing compounds A), B) C), D), E) and F) at temperatures from 20 to 80°C in a Dispermat, Skandex mixer, Red Devil, single-roll mill, triple-roll mill, beadmill or other suitable assembly.

13. Use of an aqueous, solventborne or solvent-free pigment preparation essentially containing compositions comprising
A) 95% to 5% by weight of at least one block-copolymeric, styrene oxide-containing polyalkylene oxide,
and
B)5% to 95% by weight of a ketone-aldehyde resin,
and
C)0 to 80% by weight of at least one solvent,
the sum of the amounts by weight of components A) to C) being 100% by weight,
and
D) pigments
and
E) fillers,
and
F) 0 to 10% by weight of auxiliaries,
the amount of the sum of component A), component B), and component C) being 2% - 300% by weight, based on the sum of the weights of the respective components D) and E), and it being possible for the amount of component E) in the pigment preparation also to be 0% by weight, in a coating material.

14. Use according to Claim 13, **characterized in that** it comprises a paint, varnish, adhesive or printing ink as coating material.

## Revendications

1. Préparation pigmentaire aqueuse, contenant un solvant ou exempte de solvant, contenant essentiellement des compositions constituées par
A) 95 à 5% en poids d'au moins un poly(oxyde d'alkylène) copolymère à blocs, contenant de l'oxyde de styrène,
et
B) 5 à 95% en poids d'une résine cétone-aldéhyde,
et
C) 0 à 80% en poids d'au moins un solvant, la somme des indications pondérales des composants A) à C) étant de 100% en poids,
et
D) des pigments
et
E) des charges
et
F) 0% à 10% en poids d'adjuvants
la quantité de la somme de composant A), de composant B) et de composant C) étant de 2 - 300% en poids, par rapport à la somme des poids des composants D) et E) et la quantité de composant E) dans la préparation pigmentaire pouvant également être de 0% en poids.

2. Préparation pigmentaire selon la revendication 1, **caractérisée**
**en ce que** les poly(oxydes d'alkylène) copolymères à blocs, contenant de l'oxyde de styrène A) présentent la formule générale I :
R¹O(SO)ₐ(EO)_{b}(PO)_{c}(BO)_{d}R²,
où
R¹ signifie un radical linéaire, ramifié ou cycloaliphatique comprenant 8 à 13 atomes de carbone,
R² = hydrogène, un radical acryle, un radical alkyle ou un radical acide carboxylique comprenant à chaque fois 1 à 8 atomes de carbone,
SO = oxyde de styrène,
EO = oxyde d'éthylène,
PO = oxyde de propylène
BO = oxyde de butylène et
a = 1 à 1,9
b = 3 à 50,
c = 0 à 3,
d = 0 à 3
où a, c ou d sont différents de 0 et b ≥ a+c+d.

3. Préparation pigmentaire selon au moins l'une quelconque des revendications précédentes, **caractérisée en ce que** les résines de cétone-aldéhyde B) contiennent
I. 40 à 100% en mole, par rapport à toutes les cétones utilisées, d'au moins une cyclohexanone substituée par alkyle comprenant un ou plusieurs radicaux alkyle comprenant 1 à 8 atomes de carbone,
II. 0,8 à 2,0 moles d'au moins un aldéhyde aliphatique, par rapport à 1 mole de toutes les cétones utilisées et
III. 0 à 60% en mole, par rapport à toutes les cétones utilisées, d'autres cétones avec des radicaux hydrocarbonés aliphatiques, cycloaliphatiques, aromatiques, ceux-ci pouvant être identiques ou différents et à nouveau substitués par les radicaux hydrocarbonés mentionnés dans la chaîne hydrocarbonée, ainsi que le cas échéant des phénols et/ou de l'urée ou ses dérivés.

4. Préparation pigmentaire selon au moins l'une quelconque des revendications précédentes, **caractérisée en ce que** le rapport de mélange des poly(oxydes d'alkylène) copolymères à blocs, contenant de l'oxyde de styrène A) et des résines de cétone-aldéhyde B) est de 95:5 à 5:95.

5. Préparation pigmentaire selon au moins l'une quelconque des revendications précédentes, **caractérisée en ce que** de l'eau est contenue comme solvant C).

6. Préparation pigmentaire selon au moins l'une quelconque des revendications précédentes, **caractérisée en ce qu'**un solvant organique est contenu comme solvant C).

7. Compositions selon au moins l'une quelconque des revendications précédentes, **caractérisées**
**en ce qu'**au moins un alcool, un ester, une cétone, un éther, un glycoléther, un hydrocarbure aromatique, un hydrocarbure hydro-aromatique, un hydrocarbure halogéné, un hydrocarbure terpénique, un hydrocarbure aliphatique, un ester-alcool, le diméthylformamide ou le diméthylsulfoxyde, seul(e) ou en mélange, est contenu(e) comme solvant C).

8. Préparation pigmentaire selon au moins l'une quelconque des revendications précédentes, **caractérisée en ce que** des pigments inorganiques et/ou organiques et/ou des suies sont contenues.

9. Préparation pigmentaire selon au moins l'une quelconque des revendications précédentes, **caractérisée en ce que** des dioxydes de titane ou des oxydes de fer sont contenus comme pigments inorganiques.

10. Préparation pigmentaire selon au moins l'une quelconque des revendications précédentes, **caractérisée en ce que** des pigments azo, des pigments de type complexe métallique, des pigments de type anthraquinone, les pigments de type phtalocyanine, les pigments polycycliques, en particulier ceux de la série thio-indigo, quinacridone, dioxazine, pyrrolo, acide naphtalènetétracarboxylique, pérylène, isoamidolin(on)e, flavanthrone, pyranthrone ou isoviolanthrone sont contenus comme pigments organiques.

11. Préparation pigmentaire selon au moins l'une quelconque des revendications précédentes, **caractérisée en ce que** du noir de gaz de pétrole, du noir de fumée ou du noir de carbone sont utilisés comme suies.

12. Procédé pour la production de préparations pigmentaires aqueuses, contenant un solvant ou exemptes de solvant, contenant essentiellement des compositions constituées par
A) 95 à 5% en poids d'au moins un poly(oxyde d'alkylène) copolymère à blocs, contenant de l'oxyde de styrène,
et
B) 5 à 95% en poids d'une résine cétone-aldéhyde,
et
C) 0 à 80% en poids d'au moins un solvant, la somme des indications pondérales des composants A) à C) étant de 100% en poids,
et
D) des pigments
et
E) des charges
et
F) 0% à 10% en poids d'adjuvants
la quantité de la somme de composant A), de composant B) et de composant C) étant de 2 - 300% en poids, par rapport à la somme des poids des composants D) et E) et la quantité de composant E) dans la préparation pigmentaire pouvant également être de 0% en poids,
en ce que les composés A), B), C), D), E) et F) sont mélangés à des températures de 20 à 80°C dans un Dispermat, un mélangeur Scandex, un Red Devil, un broyeur à un cylindre, un broyeur à trois cylindres, un broyeur à billes ou un autre appareil approprié.

13. Utilisation de préparations pigmentaires aqueuses, contenant un solvant ou exemptes de solvant, contenant essentiellement des compositions constituées par
A) 95 à 5% en poids d'au moins un poly(oxyde d'alkylène) copolymère à blocs, contenant de l'oxyde de styrène,
et
B) 5 à 95% en poids d'une résine cétone-aldéhyde,
et
C) 0 à 80% en poids d'au moins un solvant, la somme des indications pondérales des composants A) à C) étant de 100% en poids,
et
D) des pigments
et
E) des charges
et
F) 0% à 10% en poids d'adjuvants
la quantité de la somme de composant A), de composant B) et de composant C) étant de 2 - 300% en poids, par rapport à la somme des poids des composants D) et E) et la quantité de composant E) dans la préparation pigmentaire pouvant également être de 0% en poids, dans des revêtements.

14. Utilisation selon la revendication 13,
**caractérisée**
**en ce que** des peintures, des laques, des adhésifs ou des encres d'imprimerie sont contenus comme revêtements.
